(19) Europäisches Patentamt
European Patent Office
Office européen des brevets

(11) Veröffentlichungsnummer: **0 125 601**
**B1**

(12) # EUROPÄISCHE PATENTSCHRIFT

(45) Veröffentlichungstag der Patentschrift: **07.01.87**

(51) Int. Cl.[4]: **C 08 G 75/02**

(21) Anmeldenummer: **84105136.0**

(22) Anmeldetag: **07.05.84**

(54) **Verfahren zur Herstellung von Polyarylensulfiden.**

(30) Priorität: **17.05.83 DE 3317820**

(43) Veröffentlichungstag der Anmeldung: **21.11.84 Patentblatt 84/47**

(45) Bekanntmachung des Hinweises auf die Patenterteilung: **07.01.87 Patentblatt 87/2**

(84) Benannte Vertragsstaaten: **BE DE FR GB IT NL**

(56) Entgegenhaltungen:
**GB - A - 1 078 538**
**US - A - 3 869 434**

(73) Patentinhaber: **BAYER AG, Konzernverwaltung RP Patentabteilung, D-5090 Leverkusen 1 Bayerwerk (DE)**

(72) Erfinder: **Ebert, Wolfgang, Dr., Doerperhofstrasse 31, D-4150 Krefeld (DE)**
Erfinder: **Meyer, Rolf-Volker, Dr., Buchheimer Strasse 23, D-4150 Krefeld (DE)**
Erfinder: **Idel, Karsten-Josef, Dr., Scheiblerstrasse 81, D-4150 Krefeld (DE)**
Erfinder: **Schubart, Rüdiger, Dr., An der Engelsfuhr 27, D-5060 Bergisch-Gladbach 2 (DE)**

**EP 0 125 601 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein neues Verfahren zur Herstellung von gegebenenfalls verzweigten Polyarylensulfiden aus gegebenenfalls substituierten Halogenbenzolen im Gemisch mit Polyhalogenaromaten und Alkalisulfiden in polaren Lösungsmitteln in Gegenwart von Thiosalzen.

Polyarylensulfide sind bekannt (vgl. US-PS 3648941 und 2513188). Sie können aus den entsprechenden Halogenaromaten und Alkali- oder Erdalkalisulfiden hergestellt werden. So werden z.B. nach dem in US-PS 3354129 beschriebenen Verfahren monomere und polymere Sulfide durch Umsetzung mindestens einer cyclischen Verbindung, die eine Doppelbindung zwischen benachbarten Ringatomen enthält, und die wenigstens mit einem Halogenatom substituiert ist, mit einem Alkalisulfid in einem polaren Lösungsmittel hergestellt. Polyhalogenverbindungen können als Verzweiger eingesetzt werden.

Aus der DE-AS 2453749 ist die Verwendung von Carboxylaten als Reaktionsbeschleuniger sowie die zusätzliche Verwendung von Thioverbindungen als Schwefelspender bekannt. Aus der DE-OS 2623363 bzw. der US-PS 4038261 ist für die Herstellung von Arylensulfidpolymeren die Verwendung von Lithiumchlorid oder Lithiumcarboxylaten als Katalysator bekannt.

Nach der US-PS 4038259 werden Alkalicarbonate in Kombination mit Alkalicarboxylaten und gemäss US-PS 4038263 Lithiumhalogenide als Katalysatoren für die Polyphenylensulfidherstellung eingesetzt. Nach der DE-OS 2623362 bzw. US-PS 4038262 werden Lithiumhalogenide oder Alkalicarboxylate zusammen mit Kohlendioxid und Alkalihydroxiden als Katalysator für die Herstellung von Arylensulfidpolymeren verwendet.

Weiterhin ist z.B. aus der US-PS 4038260 die Verwendung von Alkalimetallsulfonaten und aus der US-PS 4039518 die Verwendung von Lithiumcarbonat und Lithiumborat als Katalysator bekannt.

Polyarylensulfide mit verringertem Schmelzfliessverhalten können unter Verwendung von Trialkaliphosphat-Katalysatoren (DE-OS 2930710) oder Alkaliphosphonat-Katalysatoren (DE-PS 2930797) erhalten werden.

Aus der DE-OS 2623333 ist bekannt, zuerst das Hydratwasser des als Katalysator eingesetzten Lithiumacetats zu entfernen und in einem zweiten Schritt das Hydratwasser des Natriumsulfidhydrats.

Im allgemeinen werden die p-Polyphenylensulfide durch eine Kettenverlängerungs- und Verzweigungsreaktion einem Härtungs- oder Curingschritt unterzogen (z.B. US-PS 3727620, US-PS 3524835, US-PS 3839301). Ohne diesen Härtungsschritt besitzen die p-Polyphenylensulfide im allgemeinen eine sehr niedrige Schmelzviskosität, die eine thermoplastische Verarbeitung kaum zulässt.

In der US-PS 4116947 bzw. DE-OS 2817731 wird beschrieben, dass durch eine bestimmte Menge Restwasser bewirkt wird, dass die p-Polyphenylensulfide ohne Härtungsschritt zu Fasern versponnen und extrudiert sowie formgepresst werden können.

Dieser Stand der Technik setzt im allgemeinen die Verwendung von Alkalicarboxylaten voraus. Weiterhin sind bestimmte Mengen Wasser im Umsetzungsgemisch vorhanden. Die Mengen, in denen diese Katalysatoren verwendet werden, gehen zudem weit über übliche katalytische Mengen hinaus. Sie werden nahezu äquimolar eingesetzt. Darüber hinaus ist die Verwendung von Alkalihydroxiden in Mengen bis zu 20 Mol-% notwendig.

Es wurde nun gefunden, dass Polyarylensulfide in guten Ausbeuten ohne Zusatz von Alkalicarboxylaten erhalten werden, wenn man die Herstellung der Polyarylensulfide in Gegenwart kleiner Mengen von Thiosalzen durchführt.

Die so erhaltenen Polyarylensulfide zeichnen sich durch besonders hohe Schmelzpunkte, die auf erhöhte Kristallität hinweisen und hohe Reinheit aus.

Gegenstand der Erfindung ist daher ein Verfahren zur Herstellung von gegebenenfalls verzweigten, hochmolekularen Polyarylensulfiden mit verbesserter Wärmeformbeständigkeit, aus

a) Dihalogenbenzolen, von denen 0 bis 100 Mol-%, vorzugsweise 50 bis 100 Mol-% der Formel (I)

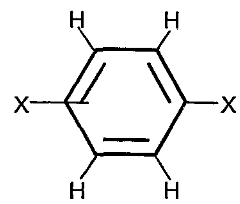

(I),

und 0 bis 100 Mol-%, vorzugsweise 0 bis 50 Mol-% der Formel (II)

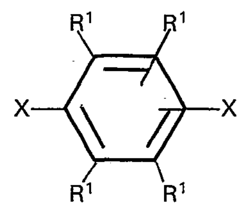

(II),

entsprechen,

in denen

X für zueinander meta- oder para-ständiges Halogen wie Fluor, Chlor oder Brom steht und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, wobei zwei zueinander orthoständige Reste $R^1$ zu einem aromatischen oder heterocyclischen 5 bis 10gliedrigen Ring, der bis zu drei Heteroatome wie O, N, S enthalten kann, verknüpft sein können, und immer mindestens ein Rest $R^1$ verschieden von Wasserstoff ist und

b) 0 bis 5,0 Mol-%, bevorzugt 0,1 bis 2,0 Mol-%, bezogen auf die Summe der Dihalogenaromaten der Formel (I) und (II), eines Tri- oder Tetrahalogenaromaten der Formel (III)

$$ArHal_n \qquad (III),$$

wobei

Ar ein aromatischer oder heterocyclischer Rest, der bis zu drei Heteroatome wie N, O, S enthalten kann, mit 6-24 C-Atomen ist,

Hal für Halogen wie Fluor, Chlor, Brom und Jod steht,

n für die Zahl 3 oder 4 steht,

und

c) Alkalisulfiden, bevorzugt Natrium- oder Kaliumsulfid oder deren Mischung, gegebenenfalls in Form der Hydrate, gegebenenfalls zusammen mit Alkalihydroxiden wie Natrium- und Kaliumhydroxid, wobei das molare Verhältnis von (a+b) : c im Bereich von 0,85:1 bis 1,15:1, bevorzugt 0,95:1 bis 1,05:1 liegt,

d) in einem polaren Lösungsmittel, gegebenenfalls in Anwesenheit von weiteren Cosolventien und wobei das molare Verhältnis von c) zu d) im Bereich von 1:2 bis 1:15 liegt,

wobei die genannten Komponenten in Gegenwart von Thiosalzen der Formel (IV)

$$(R - Y - \underset{\underset{Z}{\|}}{C} - S -)_n M \qquad (IV),$$

in welcher

R für $C_1$-$C_{20}$-Alkyl, $C_5$-$C_{20}$-Cycloalkyl, $C_6$-$C_{24}$-Aryl oder $C_7$-$C_{24}$-Aralkyl steht, wobei in den Cycloalkyl- oder Aryl- oder Aralkylresten 1 bis 3 Ringkohlenstoffatome durch Heteroatome wie N, O ersetzt sein können,

Y für eine einfache Bindung, O, S, oder N-$R^1$, worin $R^1$ für Wasserstoff und die für R angegebene Bedeutung steht, und R und $R^1$ auch Glieder eines gemeinsamen, gegebenenfalls heterocyclischen Ringes mit 5 bis 7 Ringgliedern sein können,

Z für O und/oder S steht und

M für ein n-wertiges Kation aus der Gruppe der Alkali- oder Erdalkalimetalle wie z.B. $Na^+$, $K^+$, $Mg^{2+}$, $Ca^{2+}$ steht oder für ein Ammonium-Kation $[NR^2_4]^+$ in der $R^2$ für Wasserstoff und die für R angegebene Bedeutung steht, ferner können mehrere $R^2$ auch Glieder eines gemeinsamen gegebenenfalls heterocyclischen Ringes mit 5-7 Ringgliedern sein, und

n 1, 2 oder 3 bedeutet,

miteinander umgesetzt werden.

Beispiele für erfindungsgemäss einsetzbare Dihalogenbenzole der Formel I sind: p-Difluorbenzol, p-Dichlorbenzol, p-Dibrombenzol, 1-Fluor-4-chlorbenzol, 1-Fluor-4-brombenzol, 1-Chlor-4-brombenzol, m-Difluorbenzol, m-Dichlorbenzol, m-Dibrombenzol, 1-Chlor-3-brombenzol. Sie sind allein oder im Gemisch miteinander einsetzbar.

Beispiele für erfindungsgemäss einsetzbare Dihalogenbenzole der Formel II sind 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 1,4-Dichloranthrachinon. Sie sind allein oder im Gemisch miteinander einsetzbar.

Beispiele für die erfindungsgemäss einzusetzenden Polyhalogenaromaten der Formel III sind: 1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Für das erfindungsgemässe Verfahren können polare Lösungsmittel eingesetzt werden, die eine ausreichende Löslichkeit der organischen und anorganischen Reaktanten unter den Reaktionsbedingungen gewährleisten. Bevorzugt werden Lactame und Amide und besonders bevorzugt N-Alkyllactame eingesetzt.

Beispielsweise kommen als Lösungsmittel in Frage:

Dimethylformamid, Dimethylacetamid, Caprolactam, N-Methylcaprolactam, N-Ethylcaprolactam, N-Isopropylcaprolactam, N-Methyl-2-pyrrolidon, N-Ethyl-2-pyrrolidon, N-Isopropyl-2-pyrrolidon, N-Methyl-3-methyl-2-pyrrolidon, N-Methyl-5-methyl-2-pyrrolidon, N-Methyl-3,4,5-trimethyl-2-pyrrolidon, N-Methyl-2-piperidon, N-Ethyl-2-piperidon, N-Methyl-6-methyl-2-piperidon, N-Methyl-3-ethyl-2-piperidon.

Es können auch Mischungen der vorstehenden Lösungsmittel verwendet werden.

Die verwendeten Alkalisulfide können aus Schwefelwasserstoff oder den Alkalihydrogensulfiden und entsprechenden stöchiometrischen Mengen Alkalihydroxiden durch Neutralisation in oder ausserhalb der Reaktionslösung hergestellt werden. Es können bei Verwendung der reinen Alkalisulfide zusätzliche Alkalihydroxide zugegeben werden, um etwa beigemengte Alkalihydrogensulfide zu neutralisieren.

Erfindungsgemässe Thiosalze der Formel IV sind beispielsweise

a) Alkali- oder Erdalkalisalze von Thiocarbonsäuren der allgemeinen Formel (V)

$$(R - \underset{\underset{O}{\|}}{C} - S\ )_n M \qquad (V)$$

in welcher R, M und n die bei Formel (IV) angegebene Bedeutung haben, z.B.

$$CH_3 - \underset{\underset{O}{\|}}{C} - S - Na/K; \qquad CH_3 - CH_2 - \underset{\underset{O}{\|}}{C} - S - Na/K;$$

$$CH_3CH_2CH_2\text{-}\underset{\underset{O}{\|}}{C}\text{-}S\text{-}Na/K; \qquad \begin{matrix}CH_3\\ CH_3\end{matrix}\!\!>CH\text{-}\underset{\underset{O}{\|}}{C}\text{-}S\text{-}Na/K;$$

$$CH_3(CH_2)_3\text{-}\underset{\underset{O}{\|}}{C}\text{-}S\text{-}Na/K; \qquad CH_3\text{-}\underset{\underset{CH_3}{|}}{CH}\text{-}CH_2\text{-}\underset{\underset{O}{\|}}{C}\text{-}S\text{-}Na/K;$$

$$\left(CH_3\text{-}CH_2\text{-}\underset{\underset{CH_3}{|}}{CH} - \underset{\underset{O}{\|}}{C} - S—\right)_2 Ca;$$

$$\left(CH_3(CH_2)_4\text{-}\underset{\underset{O}{\|}}{C}\text{-}S—\right)_2 Mg;$$

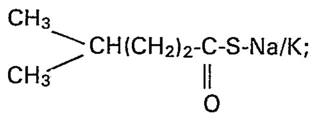

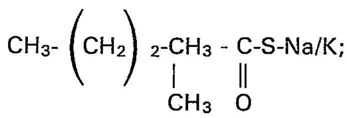

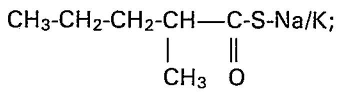

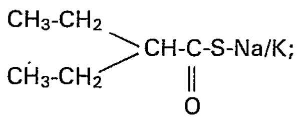

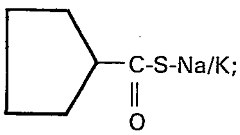

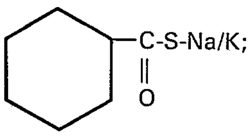

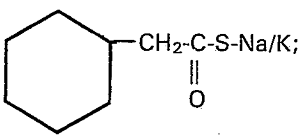

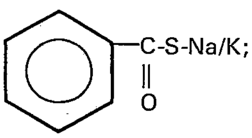

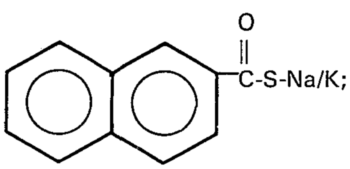

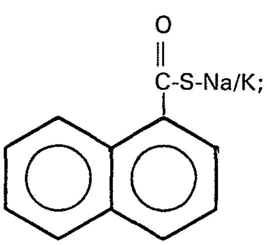

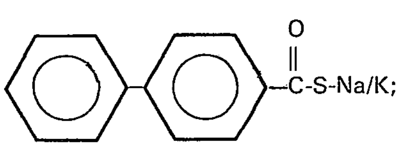

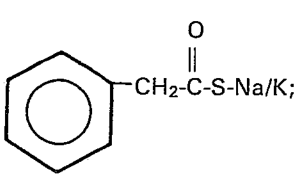

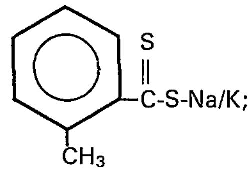

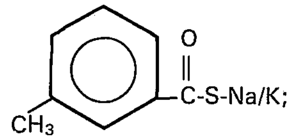

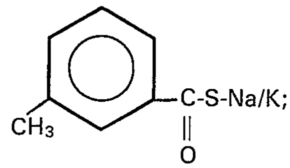

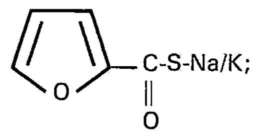

vorzugsweise die Natriumsalze der Thioessigsäure, Thiopropionsäuren, Thiobuttersäuren, Thiophenylessigsäure oder der Thiobenzoesäure.

b) Salze von Dithiocarbonsäuren der Formel (VI)

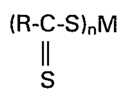

in welcher R, M und n die bei Formel (IV) angegebene Bedeutung haben, z.B.

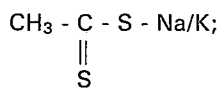

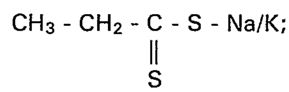

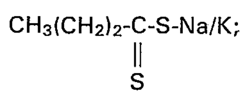

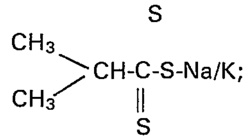

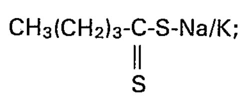

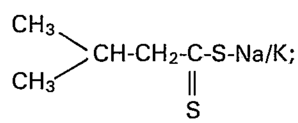

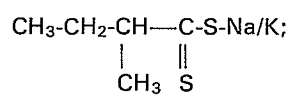

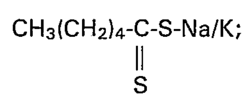

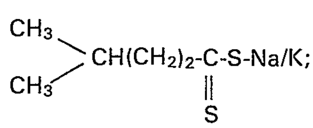

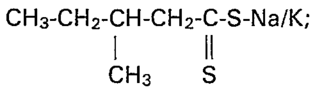

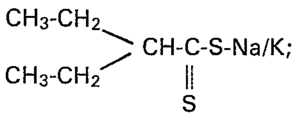

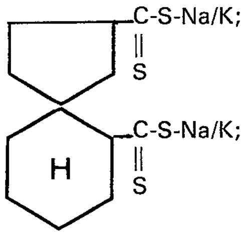

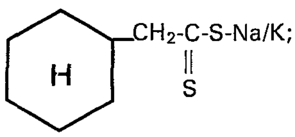

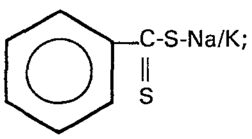

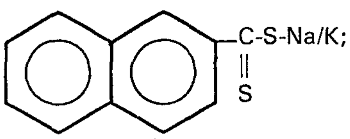

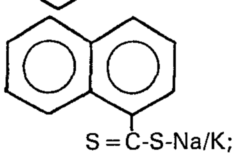

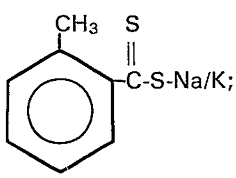

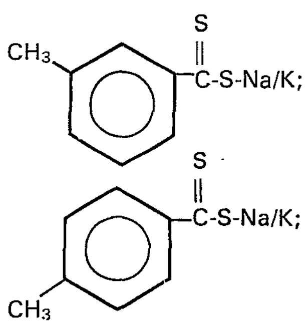

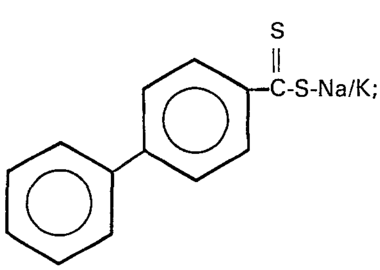

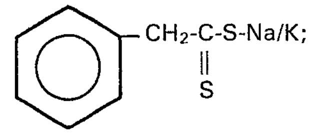

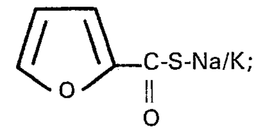

Vorzugsweise werden die Alkalisalze der Dithioessigsäure und/oder Dithiophenylessigsäure eingesetzt.

c) Xanthogenate der Formel (VII) wie beispielsweise die Natrium- und Kaliumsalze der Xanthogensäuren

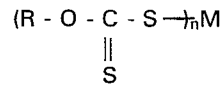 (VII)

in welcher R, M und n die bei Formel (IV) angegebene Bedeutung haben, z.B.: Methylxanthogenat, i-Propyl-, n-Butyl-, (2-Methyl-propyl)-, (1-Methyl-propyl)-, tert.-Butyl-, Pentyl-, (3-Methylbutyl)-, (2-Methylbutyl)-, (1-Methylbutyl)-, (1-Ethylpropyl)-, Cyclopropyl-, (3-Methylcyclopentyl)-, Cyclopentyl-, Cyclohexyl-, Phenyl-, 1-Naphthyl-, 2-Naphthyl-, (o-Kresyl)-, (m-Kresyl)-, (p-Kresyl)-, Benzylxanthogenat und

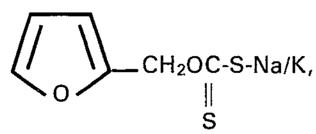

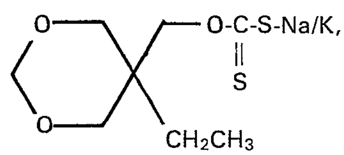

vorzugsweise die Methyl-, Ethyl-, Propyl-, Butyl-, Benzyl- und Phenylxanthogenate;

d) Alkali-Salze von Monotrithiokohlensäureestern der Formel (VIII)

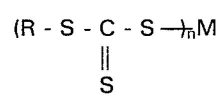 (VIII)

in welcher R, M und n die bei Formel (IV) angegebene Bedeutung haben, z.B.

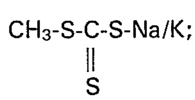

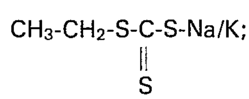

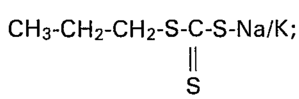

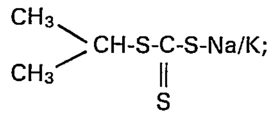

$CH_3-CH_2-CH_2-CH_2-S-C-S-Na/K;$
||
S

$CH_3-CH_2-CH-S-C-S-Na/K;$
| ||
$CH_3$ S

$CH_3-CH_2-CH_2-S-C-S-Na/K;$
| ||
$CH_3$ S

$CH_3$
|
$CH_3-C-S-C-S-Na/K;$
| ||
$CH_3$ S

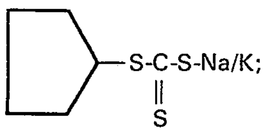

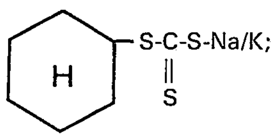

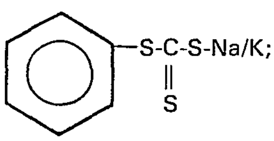

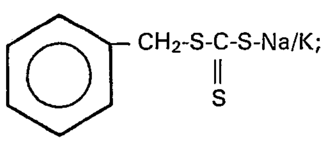

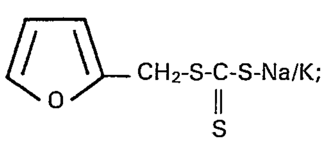

vorzugsweise die Salze des Monoethylesters der Trithiokohlensäure.

e) Alkali- oder Ammoniumsalze der Dithiocarbaminsäure der Formel (IX)

$(R - N - C - S \rightarrow_n M$ (IX)
| ||
$R^1$ S

in welcher R, $R^1$, M und n die bei Formel (IV) angegebene Bedeutung haben, z.B. folgende Verbindungen:

$CH_3-N—C-S-Na/K;$
| ||
$CH_3$ S

$CH_3-CH_2-N—C-S-Na/K;$
| ||
$CH_2$ S
|
$CH_3$

$(CH_3-CH_2-CH_2)_2-N-C-S-Na/K;$
||
S

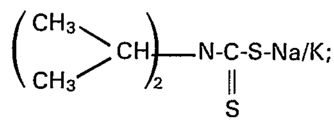

$(CH_3-CH_2-CH_2-CH_2)_2-N-C-S-Na/K;$
||
S

$(CH_3-CH_2-CH)_2N-C-S-Na/K;$
| ||
$CH_3$ S

$(CH_3-CH-CH_2)_2N-C-S-Na/K;$
| ||
$CH_3$ S

$[CH_3-(CH_2)_4CH_2]_2N-C-S-Na/K;$
||
S

$[CH_3(CH_2)_5]_2N-C-S-Na/K;$
||
S

$[CH_3-(CH_2)_8-CH_2]_2N-C-S-Na/K;$
||
S

$[CH_3(CH_2)_{10}CH_2]_2N-C-S-Na/K;$
||
S

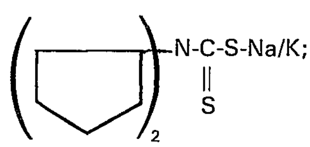

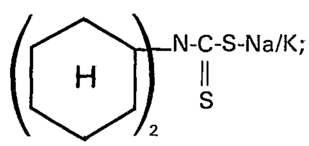

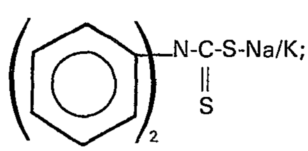

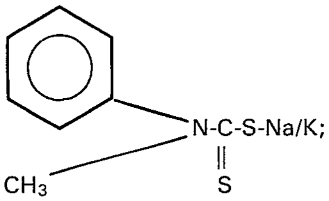

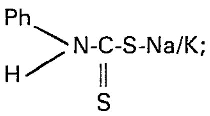

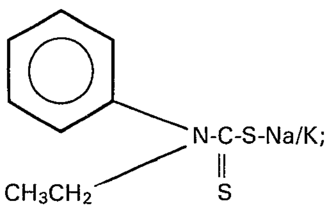

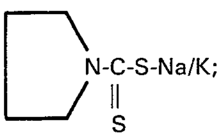

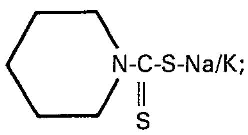

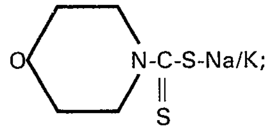

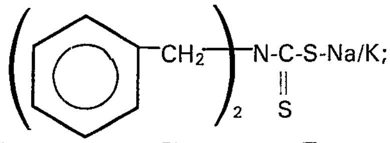

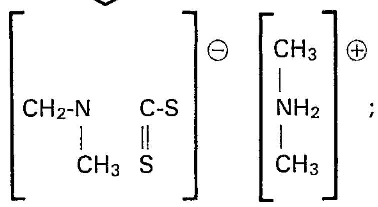
;

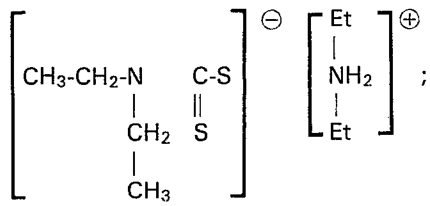
;

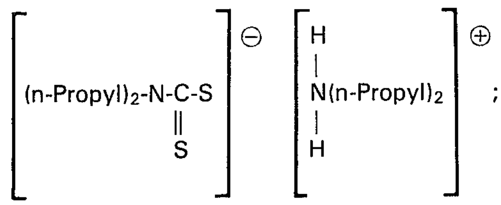
;

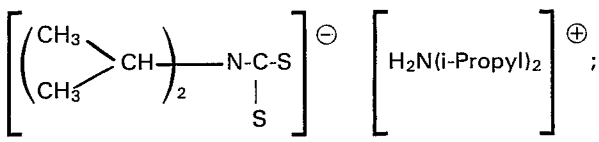
;

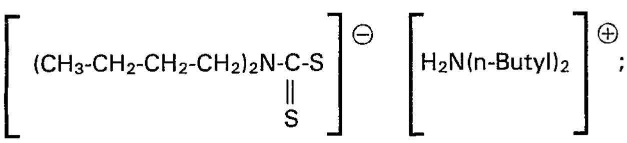
;

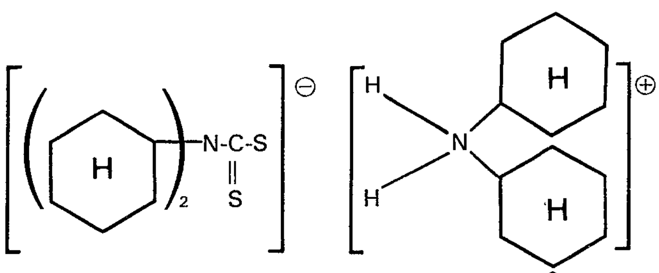

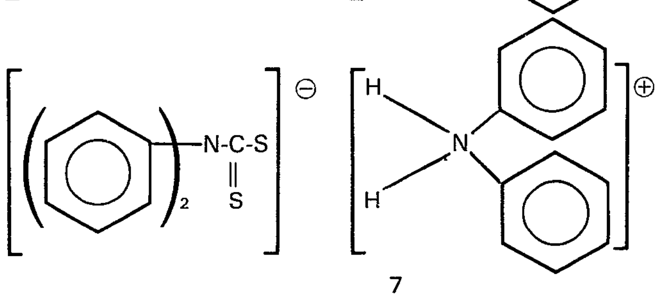
;

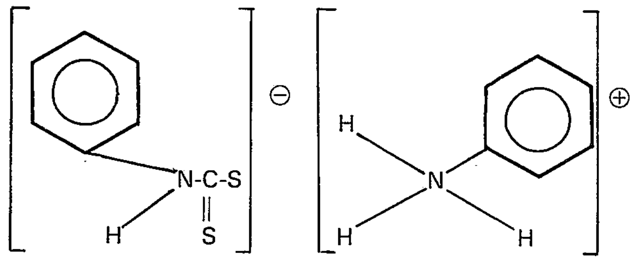

,

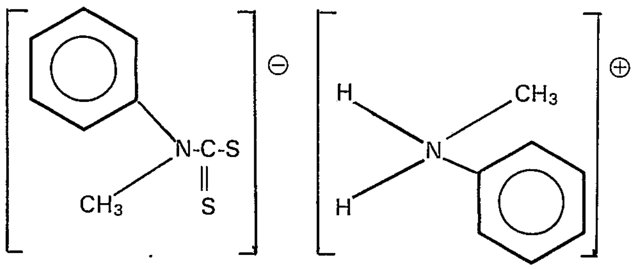

;

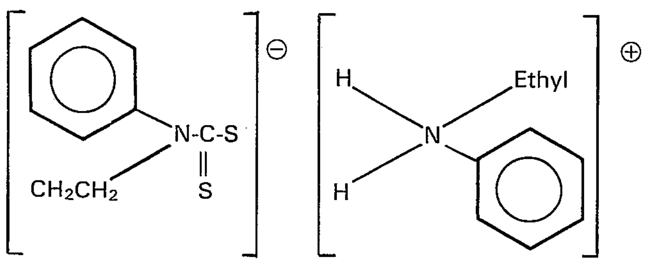

;

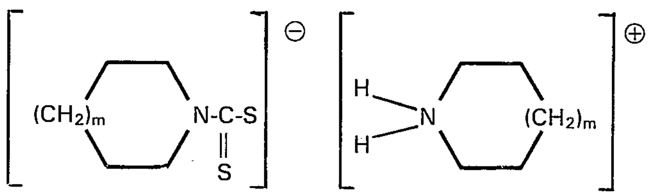

mit m = 0, 1, 2

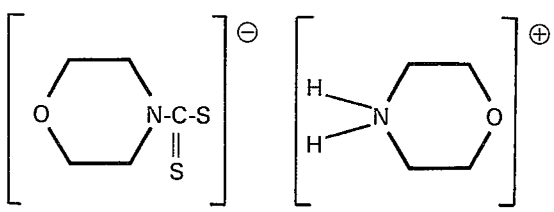

;

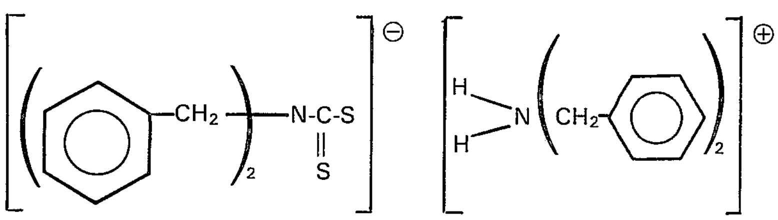

;

vorzugsweise werden die folgenden Verbindungen verwendet:

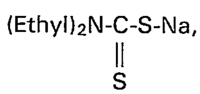

,

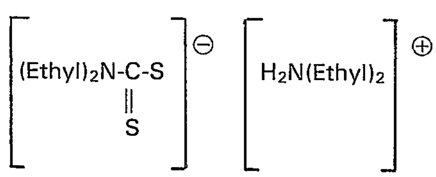

;

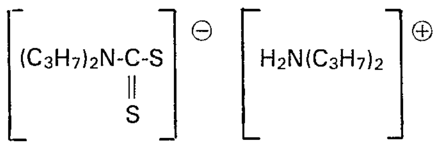 ;

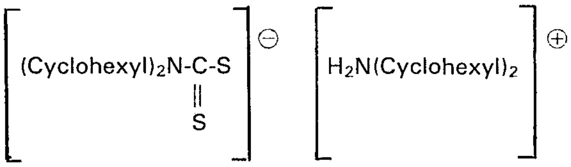 ;

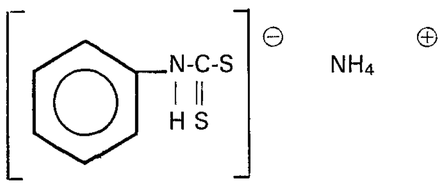

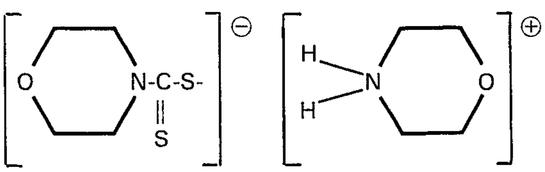

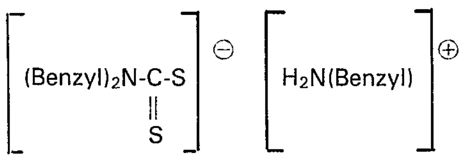 , 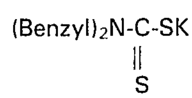

Beim erfindungsgemässen Verfahren können die Verbindungen der Formel IV allein oder Gemische aus mehreren dieser Verbindungen eingesetzt werden. Vorzugsweise Xanthogenate und Dithiocarbaminate.

Im allgemeinen werden 0,001 bis 0,5 Mol, vorzugsweise 0,005 Mol bis 0,15 Mol Thiosalz der Formel IV pro Mol Alkalisulfid eingesetzt.

Die Umsetzungstemperatur beträgt 160 bis 295°C, vorzugsweise 190 bis 275°C.

Die Dauer der Umsetzung (Polykondensation) kann sehr unterschiedlich sein. Sie kann bis zu 30 Stunden betragen. Vorzugsweise dauert sie 0,2 bis 15 Stunden.

Das erfindungsgemässe Verfahren kann wie folgt durchgeführt werden:

Das Dihalogenbenzol oder Gemische aus Dihalogenbenzolen, gegebenenfalls im Gemisch mit einem Polyhalogenaromaten, Alkalisulfid und die Thiosalze können in jeder Form im erfindungsgemäss einzusetzenden polaren Lösungsmittel gemischt und zur Reaktion gebracht werden. Dabei kann es von Vorteil sein, wenn Wasser, das in Form von Hydratwasser der Alkalisulfide und/oder frei als Mischungskomponente von wässrigen Lösungen der erfindungsgemäss einzusetzenden Sulfide im Gemisch sein kann, vor der Zugabe des Dihalogenbenzols und der Thiosalze weitgehend entfernt wird.

So ist es vorteilhaft, dass bei Verwendung von hydratwasserhaltigen Alkalisulfiden pro Mol Alkalisulfid < 1,0 Mol Wasser, bevorzugt < 0,5 Mol Wasser im Umsetzungsgemisch vorhanden sind. Eine Möglichkeit, diesen Wassergehalt zu erreichen, besteht z.B. darin, die Ausgangsverbindungen vorzutrocknen. Dies kann z.B. erreicht werden, indem die Alkalisulfide im Reaktionsgemisch durch azeotrope Destillation (z.B. mit Toluol, Xylol) vor der Reaktion entwässert werden. Vorzugsweise werden entwässerte Alkalisulfide verwendet, wodurch eine wesentliche Vereinfachung des Verfahrens erreicht wird.

Liegt die Reaktionstemperatur der erfindungsgemässen Polykondensation höher als der Siedepunkt des Lösungsmittels, so kann unter Druck umgesetzt werden. Eine stufenweise Steigerung der Reaktionstemperatur während der Dauer der Umsetzung kann vorteilhaft sein.

Dihalogenbenzol und Alkalisulfid werden etwa äquimolar umgesetzt. Das Molverhältnis Dihalogenbenzol/Alkalisulfid liegt im Bereich 0,85:1 bis 1,15:1, bevorzugt im Bereich von 0,95:1 bis 1,05:1.

Die erfindungsgemäss einzusetzenden Polyhalogenaromaten der Formel III können bis zu einer Menge von bis zu 5,0 Mol-%, vorzugsweise 0,1 bis 2,0 Mol-%, bezogen auf den Anteil Dihalogenbenzol zugesetzt werden. Bei der Verwendung von Polyhalogenaromaten werden verzweigte Polyarylensulfide erhalten.

Die Menge Lösungsmittel kann in einem weiten Bereich gewählt werden, sie liegt bei 2 bis 15 Mol pro Mol Alkalisulfid.

Bei den herkömmlichen Verfahren ist es notwendig, dem Natriumsulfid eine grössere Menge Alkalihydroxid zur Neutralisation noch vorhandener Mengen Alkalihydrogensulfid zuzumischen. Im erfindungsgemässen Verfahren kann darauf verzichtet werden.

Die Aufarbeitung des Reaktionsgemisches kann in mannigfaltiger Weise erfolgen.

Das Polyarylensulfid kann direkt aus der Reaktionslösung oder erst nach Zugabe, z.B. von Wasser und/oder verdünnten Säuren nach üblichen Verfahrensweisen abgetrennt werden, beispielsweise durch Filtration oder Zentrifugieren. Nach der Filtration schliesst sich im allgemeinen eine Wäsche mit Wasser an. Eine Wäsche oder Extraktion mit anderen Waschflüssigkeiten, die auch zusätzlich oder nachträglich zur Wasserwäsche durchgeführt werden kann, ist auch möglich.

Das Polymere kann auch durch Abziehen des Lösungsmittels aus dem Reaktionsraum und eine anschliessende Wäsche, wie oben beschrieben, gewonnen werden.

Führt man das erfindungsgemässe Verfahren bei Normaldruck durch, werden die Polyarylensulfide in Ausbeuten von etwa 80%-90% erhalten. Diese Ausbeuten können bei den bekannten Verfahren nur mit Hilfe technisch aufwendiger Druckreaktionen erhalten werden.

Werden nach dem erfindungsgemässen Verfahren Polyarylensulfide hergestellt, so sind im Vergleich zu den bekannten Verfahren wesentlich geringere Mengen Katalysator notwendig. Während bei den bekannten Verfahren Carboxylate in etwa äquimolaren Mengen (bez. aus Alkalisulfid) verwendet werden, genügen beim erfindungsgemässen Verfahren wenige Mol-%.

Günstiger als in den bisherigen Verfahren ist weiterhin, dass die Volumenausbeute der Reaktion besser ist. So wird, bezogen auf Natriumsulfid, normalerweise in etwa 20%iger Lösung in N-Methylpyrrolidon gearbeitet. Mit dem erfindungsgemässen Verfahren kann in etwa 30%iger Lösung gearbeitet werden.

Die nach dem erfindungsgemässen Verfahren hergestellten Polyarylensulfide sind von hoher Reinheit. Das zeigt sich in den sehr hohen Schmelzbereichen (bis 320°C). Derartige Polyarylensulfide zeichnen sich durch erhöhte Wärmeformbeständigkeit aus und sind somit für viele technische Einsatzgebiete, insbesondere auf dem Gebiet der Elektrik, Elektronik und bei Anwendungen im Motorraum von Kraftfahrzeugen von besonderem Interesse.

*Beispiele*

*Beispiel 1*

49,24 g (0,373 Mol) Natriumsulfid (× $3H_2O$) werden mit 50 ml Wasser und 300 ml Toluol vorgelegt, mit Stickstoff begast und anschliessend das Wasser azeotrop entfernt. Zur vollständigen Entfernung des Wassers muss mehrmals Toluol nachgegeben werden. Anschliessend werden 150 ml N-Methylpyrrolidon (NMP) zugegeben und im Stickstoffstrom zum Siedepunkt des NMP's erhitzt, um Rest des Toluols zu entfernen. Danach werden 56,85 g (0,387 Mol) p-Dichlorbenzol und 2,69 g Natriummethylxanthogenat (5 Mol-%) zugegeben und 12 h am Rückfluss im Stickstoffstrom gekocht.

Zur Aufarbeitung wird mit verdünnter Salzsäure aufgenommen, abgesaugt, mit Wasser, Dichlormethan und Ethanol gewaschen. Nach 12stündigem Trocknen bei 100°C im Vakuum erhält man 33 g (81,8% der Theorie) Polyphenylensulfid, Schmelzbereich 272-283°C.

*Beispiel 2*

30,3 g (0,373 Mol) Natriumsulfid (mit 0,178 Mol $H_2O$) werden zusammen mit 56,85 g (0,387 Mol) p-Dichlorbenzol, 2,07 g $Et_2N$-C-SH × $HNEt_2$ (2,5
||
S
Mol-% bezogen auf eingesetztes Natriumsulfid) und 150 ml N-Methylpyrrolidon 12 h zum Rückfluss erhitzt. Die Aufarbeitung erfolgt analog Beispiel 1. Man erhält 34 g Polyphenylsulfid (84,28% der Theorie), Schmelzbereich 278-289°C.

*Beispiel 3*

61,4 g (0,467 Mol) Natriumsulfid (× $3H_2O$) werden wie in Beispiel 1 unter Stickstoff mit Xylol entwässert und mit N-Methylpyrrolidon aufgenommen. Anschliessend werden zur Herstellung von 0,094 Mol Natriumthioacetat, 7,4 g (0,094 Mol) Acetylchlorid gelöst in 30 ml N-Methylpyrrolidon in 15 min eingetropft. Danach werden 56,85 g (0,387 Mol) 1,4-Dichlorbenzol zugegeben und 12 h am Rückfluss gekocht. Die Aufarbeitung erfolgt wie in Beispiel 1, wobei 34 g (84,28% der Theorie) Polyphenylensulfid erhalten werden, Schmelzbereich 282-288°C.

*Beispiel 4*

29,66 g (0,373 Mol) Natriumsulfid × 0,085 Mol $H_2O$ werden zusammen mit 150 ml N-Methylpyrrolidon, 56,85 g (0,387 Mol) p-Dichlorbenzol und 5,4 g (5 Mol-%)

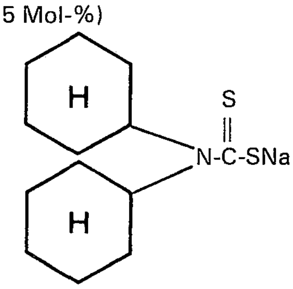

12 h am Rückfluss unter Stickstoff gekocht. Die Aufarbeitung erfolgt wie in Beispiel 1. Man erhält 33 g Polyphenylensulfid (81,8% der Theorie), Schmelzbereich 285-292°C.

*Beispiel 5*

29,66 g (0,373 Mol) Natriumsulfid × 0,085 Mol $H_2O$, 56,85 g (0,387 Mol) 1,4-Dichlorbenzol, 6,24 g (5 Mol-%) (n-Butyl)$_2$N-CSH × NH(n-Butyl)$_2$ wer-
||
S
den im Stickstoffstrom in 150 ml N-Methylpyrrolidon 12 h am Rückfluss gekocht. Die Aufarbeitung erfolgt wie in Beispiel 1. Man erhält 33,5 g (83,0% der Theorie) Polyphenylensulfid, Schmelzbereich 261-267°C.

*Beispiel 6*

30,9 g (0,373 Mol) Natriumsulfid 0,178 Mol $H_2O$, 56,85 g (0,387 Mol) 1,4-Dichlorbenzol, 3,48 g (5 Mol-%)

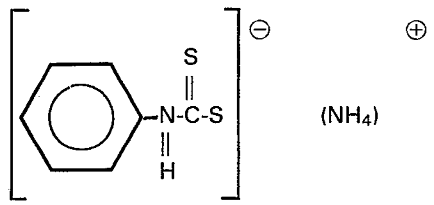

werden in 150 ml N-Methylpyrrolidon im Stickstoffstrom 12 h am Rückfluss erhitzt. Die Aufarbeitung erfolgt wie in Beispiel 1. Man erhält 34 g (84,3% der Theorie) Polyphenylensulfid, Schmelzbereich 295-300°C.

**Patentansprüche**

1. Verfahren zur Herstellung von gegebenenfalls verzweigten, hochmolekularen Polyarylensulfiden, aus

a) Dihalogenbenzolen, von denen 0 bis 100 Mol-% der Formel (I)

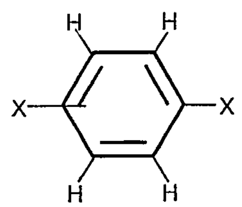

(I),

und 0 bis 100 Mol-% der Formel (II)

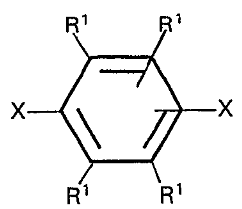

(II),

entsprechen,
in denen
X für zueinander meta- oder para-ständiges Halogen steht und
$R^1$ gleich oder verschieden ist, und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, wobei zwei zueinander orthoständige Reste $R^1$ zu einem aromatischen oder heterocyclischen 5 bis 10gliedrigen Ring, der bis zu drei Heteroatome wie O, N, S enthalten kann, verknüpft sein können, und immer mindestens ein Rest $R^1$ verschieden von Wasserstoff ist und

b) 0 bis 5,0 Mol-%, bezogen auf die Summe der Dihalogenaromaten der Formel (I) und (II), eines Tri- oder Tetrahalogenaromaten der Formel (III)

$$ArHal_n \qquad (III),$$

wobei
Ar ein aromatischer oder heterocyclischer Rest, der bis zu drei Heteroatome wie N, O, S enthalten kann, mit 6-24 C-Atomen ist,
Hal für Halogen steht,
n für die Zahl 3 oder 4 steht,
und

c) Alkalisulfiden, gegebenenfalls in Form ihrer Hydrate, gegebenenfalls zusammen mit Alkalihydroxiden, wobei das molare Verhältnis von (a+b) : c im Bereich von 0,85:1 bis 1,15:1 liegt,

d) in einem polaren Lösungsmittel, gegebenenfalls in Anwesenheit von weiteren Cosolventien und wobei das molare Verhältnis von c) zu d) im Bereich von 1:2 bis 1:15 liegt,

dadurch gekennzeichnet, dass die genannten Komponenten in Gegenwart von Thiosalzen der Formel (IV)

$$(R - Y - \underset{\underset{Z}{\|}}{C} - S -)_nM \qquad (IV),$$

in welcher
R für $C_1$-$C_{20}$-Alkyl, $C_5$-$C_{20}$-Cycloalkyl, $C_6$-$C_{24}$-Aryl oder $C_7$-$C_{24}$-Aralkyl steht, wobei in den Cycloalkyl- oder Aryl- oder Aralkylresten 1 bis 3 Ringkohlenstoffatome durch Heteroatome wie N, O ersetzt sein können,
Y für eine einfache Bindung, O, S, oder N-$R^1$, worin $R^1$ für Wasserstoff und die für R angegebene Bedeutung steht, und R und $R^1$ auch Glieder eines gemeinsamen, gegebenenfalls heterocyclischen Ringes mit 5 bis 7 Ringgliedern sein können,
Z für O und/oder S steht und
M für ein n-wertiges Kation aus der Gruppe der Alkali- oder Erdalkalimetalle wie z.B. $Na^+$, $K^+$, $Mg^{2+}$, $Ca^{2+}$ steht oder für ein Ammonium-Kation $[NR^2_4]^+$ in der $R^2$ für Wasserstoff und die für R angegebene Bedeutung steht, ferner können mehrere $R^2$ auch Glieder eines gemeinsamen gegebenenfalls heterocyclischen Ringes mit 5-7 Ringgliedern sein, und
n 1, 2 oder 3 bedeutet,
miteinander umgesetzt werden.

2. Verfahren gemäss Anspruch 1, dadurch gekennzeichnet, dass als Verbindungen der Formel (IV) Salze von Thiocarbonsäuren verwendet werden.

3. Verfahren gemäss Anspruch 1, dadurch gekennzeichnet, dass als Verbindungen der Formel (IV) Salze von Dithiocarbonsäuren verwendet werden.

4. Verfahren gemäss Anspruch 1, dadurch gekennzeichnet, dass als Verbindungen der Formel (IV) Xanthogenate verwendet werden.

5. Verfahren gemäss Anspruch 1, dadurch gekennzeichnet, dass als Verbindungen der Formel (IV) Salze von Mono-Trithiokohlensäureestern verwendet werden.

6. Verfahren gemäss Anspruch 1, dadurch gekennzeichnet, dass als Verbindungen der Formel (IV) Salze der Dithiocarbaminsäure (Thiurame) verwendet werden.

7. Verfahren gemäss Anspruch 1 bis 6, dadurch gekennzeichnet, dass das Reaktionsgemisch < 1 Mol Wasser pro Mol Alkalisulfid enthält.

## Claims

1. A process for the preparation of optionally branched high molecular weight polyarylene sulphides from

a) dihalogen benzenes, 0 to 100 mol % of which correspond to formula (I):

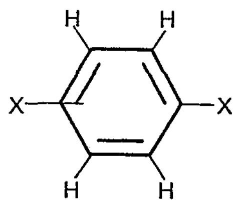

(I),

and 0 to 100 mol % to formula (II):

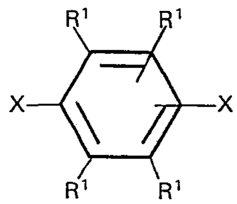

(II),

wherein

X represents halogen in the meta or para positions relative to each other, and

$R^1$ may be identical or different and represents hydrogen, $C_1$-$C_{20}$ alkyl, $C_5$-$C_{20}$ cycloalkyl, $C_6$-$C_{24}$ aryl, $C_7$-$C_{24}$ alkaryl or $C_7$-$C_{24}$ aralkyl, and two groups $R^1$ which are in the ortho positions relative to each other may be linked together to form an aromatic or heterocyclic 5- to 10-membered ring which may contain up to three hetero atoms such as O, N or S, and in all cases at least one group $R^1$ is different from hydrogen, and

b) 0 to 5.0 mol %, based on the sum of the aromatic dihalogen compounds of formulae (I) and (II), of an aromatic trihalogen or tetrahalogen compound of formula (III):

$$ArHal_n \qquad (III)$$

wherein

Ar is an aromatic or heterocyclic group having 6-24 C atoms and optionally containing up to three hetero atoms such as N, O or S,

Hal represents halogen, and

n represents the number 3 or 4, and

c) alkali metal sulphides, optionally in the form of their hydrates, optionally together with alkali metal hydroxides,

with the molar ratio of (a+b) : c lying within the range of from 0.85:1 to 1.15:1,

d) in a polar solvent, optionally in the presence of further cosolvents and with the molar ratio of c) to d) lying within the range of from 1:2 to 1:15.

characterised in that the above mentioned components are reacted together in the presence of thio salts of the formula (IV):

$$(R-Y-\underset{\underset{Z}{\|}}{C}-S-)_nM \qquad (IV),$$

wherein

R represents $C_1$-$C_{20}$ alkyl, $C_5$-$C_{20}$ cycloalkyl, $C_6$-$C_{24}$ aryl or $C_7$-$C_{24}$ aralkyl, and 1 to 3 ring carbon atoms in the cycloalkyl or aryl or aralkyl groups may be replaced by hetero atoms such as N or O,

Y represents a single bond, O, S, or -N-$R^1$, wherein $R^1$ represents hydrogen and the meaning indicated for R, and R and $R^1$ may also be members of a common, optionally heterocyclic ring having 5 to 7 ring members,

Z represents O and/or S, and

M represents an n-valent cation from the group of alkali metals or alkaline earth metals, such as, for example, $Na^+$, $K^+$, $Mg^{2+}$ or $Ca^{2+}$ or an ammonium cation $[NR^2_4]^+$ wherein $R^2$ represents hydrogen and the meaning given for R, or several groups $R^2$ may be members of a common, optionally heterocyclic ring, having 5-7 ring members, and

n denotes 1, 2 or 3.

2. Process according to Claim 1, characterised in that the compounds of formula (IV) used are salts of thiocarboxylic acids.

3. A process according to Claim 1, characterised in that the compounds of formula (IV) used are salts of dithiocarboxylic acids.

4. A process according to Claim 1, characterised in that the compounds of formula (IV) used are xanthates.

5. A process according to Claim 1, characterised in that the compounds of formula (IV) used are salts of monotrithio-carbonic acid esters.

6. A process according to Claim 1, characterised in that the compounds of formula (IV) used are salts of dithiocarbamic acid (thiurams).

7. A process according to Claim 1 to 6, characterised in that the reaction mixture contains < 1 mol of water per mol of alkali metal sulphide.

## Revendications

1. Procédé de fabrication de sulfures de polyarylène à poids moléculaire élevé éventuellement ramifiés, à partir

a) de dihalogénobenzènes parmi lesquels 0 à 100 moles % correspondent à la formule (I)

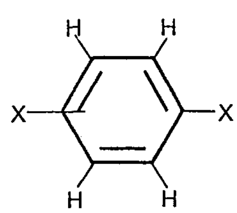

(I),

et 0 à 100 moles % à la formule (II)

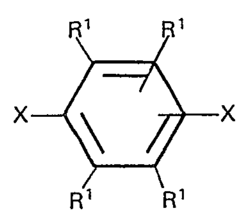

(II),

dans lesquelles les

X représentent de l'halogène se trouvant mutuellement en méta ou para et les

$R^1$ sont identiques ou différents et peuvent être de l'hydrogène, alcoyle en $C_1$-$C_{20}$, cycloalcoyle en $C_5$-$C_{20}$, aryle en $C_6$-$C_{24}$, alcaryle en $C_7$-$C_{24}$ ou aralcoyle en $C_7$-$C_{24}$, deux radicaux $R^1$ mutuellement en ortho pouvant être associés à un noyau aromatique ou hétérocyclique à 5 à 10 chaînons qui peut contenir jusqu'à trois hétéroatomes tels que O, N, S, et au moins un radical $R^1$ étant toujours différent de l'hydrogène et

b) de 0 à 5,0 moles %, par rapport à la somme des composés aromatiques dihalogénés de formule (I) et (II), d'un composé aromatique tri- ou tétrahalogéné de formule (III)

$$ArHal_n \qquad (III),$$

dans laquelle

Ar est un radical aromatique ou hétérocyclique pouvant contenir jusqu'à trois hétéroatomes tels que N, O, S et ayant 6 à 24 atomes de carbone,

Hal est de l'halogène et

n représente le nombre 3 ou 4 et

c) de sulfures alcalins, éventuellement sous forme de leurs hydrates, éventuellement conjointement avec des hydroxydes alcalins, le rapport molaire de (a+b) : c se situant dans l'intervalle de 0,85:1 à 1,15:1,

d) dans un solvant polaire, éventuellement en présence d'autres co-solvants, le rapport molaire de c) envers d) se situant dans l'intervalle de 1:2 à 1:15,

caractérisé en ce qu'on fait réagir ensemble les composés cités en présence de thiosels de formule (IV)

$$(R - Y - \underset{\underset{Z}{\|}}{C} - S -)_n M \qquad (IV),$$

dans laquelle

R représente un alcoyle en $C_1$-$C_{20}$, cycloalcoyle en $C_5$-$C_{20}$, aryle en $C_6$-$C_{24}$ ou aralcoyle en $C_7$-$C_{24}$, dans les radicaux cycloalcoyle, aryle ou aralcoyle 1 à 3 atomes de carbone nucléaires pouvant être remplacés par des hétéroatomes tels que N, O,

Y représente une simple liaison, O, S, ou N-$R^1$, où $R^1$ représente de l'hydrogène et a la signification indiquée pour R; R et $R^1$ peuvent être des membres d'un noyau commun éventuellement hétérocyclique ayant 5 à 7 chaînons nucléaires,

Z représente O et/ou S et

M représente un cation de valence n appartenant au groupe des métaux alcalins ou alcalino-terreux comme par exemple $Na^+$, $K^+$, $Mg^{2+}$, $Ca^{2+}$ ou un cation ammonium $[NR^2_4]^+$ dans lequel $R^2$ est de l'hydrogène ou a la signification donnée à R, en outre plusieurs $R^2$ pouvant aussi être des membres d'un noyau commun éventuellement hétérocyclique ayant 5 à 7 chaînons nucléaires et

n signifie 1, 2 ou 3.

2. Procédé selon la revendication 1, caractérisé en ce qu'on utilise comme composés de formule (IV) des sels d'acides thiocarboxyliques.

3. Procédé selon la revendication 1, caractérisé en ce qu'on utilise comme composés de formule (IV) des sels d'acides dithiocarboxyliques.

4. Procédé selon la revendication 1, caractérisé en ce qu'on utilise comme composés de formule (IV) des xanthogénates.

5. Procédé selon la revendication 1, caractérisé en ce qu'on utilise comme composés de formule (IV) des sels d'esters d'acide trithiocarbonique.

6. Procédé selon la revendication 1, caractérisé en ce qu'on utilise comme composés de formule (IV) des sels d'acide dithiocarbamique (thiurame).

7. Procédé selon les revendications 1 à 6, caractérisé en ce que le mélange de réaction contient moins de 1 mole d'eau par mole de sulfure alcalin.